# EUROPEAN PATENT SPECIFICATION

(11) **EP 3 493 664 B1**
(45) Date of publication and mention of the grant of the patent: **18.08.2021**
(21) Application number: 17740803.6
(22) Date of filing: 01.06.2017
(51) Int. Cl.: A01G 31/02, A01G 31/00

(54) **A PLANT GROWING DEVICE WITHOUT A DRAINAGE SYSTEM**
PFLANZENZÜCHTUNGSVORRICHTUNG OHNE DRAINAGESYSTEM
DISPOSITIF DE CULTURE DE PLANTE SANS SYSTÈME DE DRAINAGE

(30) Priority: 02.06.2016 NL 2016887
(43) Date of publication of application: 12.06.2019
(73) Proprietor: Aguilera Zayas, Miguel Angel, 2032 LK Haarlem (NL)
(72) Inventor: Aguilera Zayas, Miguel Angel, 2032 LK Haarlem (NL)
(74) Representative: Visser-Luirink, Gesina
(86) International application number: PCT/NL2017/050358
(87) International publication number: WO 2017/209613

(56) References cited:
- WO-A1-2012/072273
- JP-A- H0 753 286
- US-A- 4 178 716
- US-A- 5 533 299
- US-A- 5 590 490
- US-A- 5 992 090
- US-B2- 6 649 405

## Description

The invention relates to a plant growing device and a method to grow plants by applying the same.

Almost all known devices for use in agricultural systems comprise for irrigation the since long used system of drainage in an open space. The well-known hydroponic system and especially the Nutrient Film Technique (NFT) has various disadvantages as a high chance on the spread of diseases, especially of the roots and the high maintaining costs of the drainage system. Furthermore, upon using such a system it is not possible to regulate fertilization.

An example of a non-circulating hydroponic drainage plant-growing system has been disclosed in US patent 5,533,299 solving some but not all of these problems. In US patent 8,448,379 a totally concealed clean room vegetable factory but also the use of an overflow drain system has been disclosed.

Furthermore, by applying a drainage system the use of a 100 % organic nutrient solution is generally not possible. Once the water returns via the drainage system to the water tank several problems arise with the control of the electrical conductivity (EC) and the pH.
- Relating to the disorder of the EC: an EC meter just records the mineral part of the solution. The NFT will supply water with nutrient to the plants in accordance with the EC as measured. However, a part of the organic nutrient will not be broken down into inorganic matter. This means that the computer will give a signal to inject more water with nutrient than beneficial and a great volume of organic matter not yet mineralized will be accumulated. As a consequence, at the end an EC disorder will appear in the nutrient solution.
- Concerning the pH: all water recycled in horticulture returns with a high value of pH of above 7.5. To bring this parameter back to the optimal value of 5.8 an extremely high amount of the weak organic acid source will have to be used to achieve this pH value.

Furthermore, when we use organic nutrients in a recycling system, water has to be aerated continuously, otherwise organic matter is broken down by anaerobic bacteria instead of by aerobic bacteria. In that case unwanted microorganisms will be reproduced and plants roots will be susceptible to get sick caused as for instance by the plant parasite Pythium.

It is an object of the present invention to provide a plant growing device allowing the possibility to make use of organic feed without the high costs of maintenance of the drainage system and without the drawbacks as mentioned related to disorder of the EC, the high pH and the susceptibility to plant sicknesses. It is a further object of the present invention to provide a method to grow plants using said system.

The present invention provides a device according to claim 1, comprising:
- a container for feed in water for the plants (2), a container for fertilizer (2a), a container for water (2b), a container for acid (2c) and optionally a mixer;
- one or more growing trays (3) for one or more plants in a substrate;
- a tube (6) from said container for feed in water for the plants (2) to the one or more growing trays (3) for the transport of said feed to the plants;
- means (7) to condensate the water vapour leading to
- a tube (8) to lead back the condensed water to the container for water (2b).

The one or more growing trays (3) comprise(s) one or more water permeable separate holders (5) for one or more of the plants and passageways (4) along the holders (5). The trays may be placed above and under as well as besides each other. Tube (6) for the transport of the feed in water may be divided in more for instance lateral tubes leading to more trays. More preferably, one or more of the plants are in a pot, generally with substrate. Especially, the means (7) to condensate essentially consists of a tube at a temperature of about 20 - 22°C, more preferably about 21°C. Means common for the growing of plants like a pump suitable to pump the water and lamps to provide artificial light and heat will generally be present as well. The bottom of the holders (5) will preferably be open with one or several holes which will facilitate the water uptake from the tray (3) and by the substrate in the pot of the plants by capillarity.

Furthermore, the present invention provides a method according to claim 4 to grow plants by:
applying a plant growing device (1) according to the present invention by
   - filling the container for fertilizer (2a) with fertilizer, the container for water (2b) with water, the container for acid (2c) with acid, and the container for feed in water for the plants (2) filling with water, fertilizer and optionally acid from the respective containers, optionally with mixing;
   - pumping the feed in water through tube (6) to the one or more growing trays (3) optionally by an inlet water pipe and for instance through a passageway (4), so that the plants suck the water by capillary force;
   - allowing the water transpired and evaporated to condensate on means (7) and
   - using optionally artificial light, especially by lamps.

The feed in water will generally not only flow along the holders (5) through the passageways (4) but under the holders as well. The plants will preferably 100% artificially be illuminated by lamps, more preferably about 60 - 70% in the night and about 30 - 40% during the day, mainly to avoid peak energy consumption. The water transpired and evaporated originates from its different sides: water uptake by plants which is released by transpiration; water evaporated from substrate in case it is wet and the small water film between the growing trays which remain after the irrigation. The water will especially evaporate due to the heat released by the lamps.

The method to grow plants according to the invention comprises filling the container for fertilizer (2a) with fertilizer, the container for water (2b) with water and optionally a container for acid (2c) with acid, and the container for feed in water for the plants (2) with water, fertilizer and optionally acid from the respective containers. Furthermore, the nutrient solution will preferably be added to the irrigation system based on the electrical conductivity (EC) value of the substrate to avoid a salinization. The EC measurement generally takes place two times a week. The organic feed will preferably be diluted until the optimal EC substrate at 20 °C of 0,4 - 0,8 dSm during the first 10 days, and from 0,8 - 1,4 dSm during the next 10 days of maturity has been reached. This means that if the EC value is too high only solution without feed may be applied.

According to the invention, the container (2a) used to fill the container for feed in water (2) comprises organic fertilizer, more preferably worm manure. In a special embodiment part of said organic fertilizer, especially worm manure is diluted as a compost tea or compost brewery aerated in an aerobic condition for more than 24 hours as described in US patent 6,649,405. The other part of said organic fertilizer especially worm manure is applied as such.

The pH of the solution as supplied will be maintained at a pH of about 5,8 - 6 using an organic acid source. According to the invention, the container (2b) used to fill the container for feed in water (2) comprises an organic acid as citric acid or acetic acid.

In fact, contrary to the plant growing devices from the prior art this device according to the invention does not contain a drainage system. This gives a lot of advantages like:
- it makes the application of fertilizer which is 100 % organic on a large scale possible as for instance the best and cheap organic manure like worm manure
- costs savings related to the pipe installation: a drainage system has a complex structure with a filter installation and disinfecting equipment what may be avoided
- the consumption of water is extremely low when a drainage system may be avoided
- the harvesting cycle is generally shorter if a device is used according to the invention compared to said cycle upon using a drainage system
- no chance on contamination with fecal bacteria because first of all the water will be supplied by capillarity and not by foliar spraying and secondly because the washing process in the prior art drainage system is the moment that the plants may be infected.

The water used during the irrigation system originates from:
- water sucked up by the plants and released by transpiration,
- water evaporated from substrate present in the pots,
- between growing holders there will be a small water film which remains after the irrigation; this water will be evaporated as well due to the heat released by the lamps.

In other words: the irrigation system of the water is a recycling process. The volume of water is collected as vapour by the cooling panel of a tube, at a temperature of about 20 - 22 °C; the water source comprises the water evaporation of the plant, the humidity of the substrate saturated after the irrigation and the water film residue of the bed which supports the growing holder.

After the seedling process preferably the tray (3) and (from there) the holders (5) must be irrigated from the seedling machine, in order to initiate the water transport possible by capillarity due to the cohesion tension of water molecules.

The process will help the capillarity water movement through the porosity of the substrate. Water with the feed solution will be supplied to the growing tray (3) by flood irrigation. The amount and frequency will be calculated based on a hydric necessity and water holding capacity of the substrate. As substrate any kind of growing media for horticulture like for instance Cocos fibre or peat may be used. As indicated, a substrate may be used in a pot but a feed bed like BioStrate® Felt from Grow-Tech LLC may be applied as well.

The plant growing device according to the invention may especially solve the problems with the hydroponic device applied to baby salad, but may advantageously be applied to for instance tomato, pepper, beans, melon and so on as well.

Throughout this patent right the words 'feed' and 'nutrient' have interchangeably been used.

The present invention is further elucidated on the basis of the following drawings of a preferred embodiment with plants in a pot:

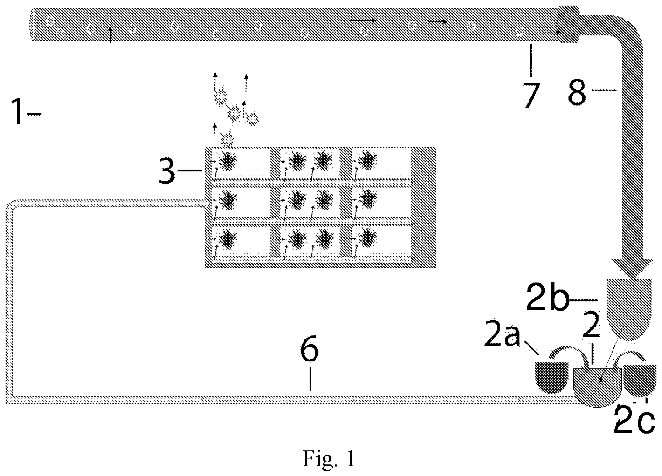

Figure 1: Schematic front view of the plant growing device (1) with an oblique top view of the growing tray (3):
   a container for feed in water for the plants (2), a container for fertilizer (2a), a container for water (2b) and a container for acid (2c); a growing tray (3) for plants; a tube (6) for the transport of the feed to the plants via the tray (3); condensation means (7) and a tube (8) to lead back the water to the container with water (2b).

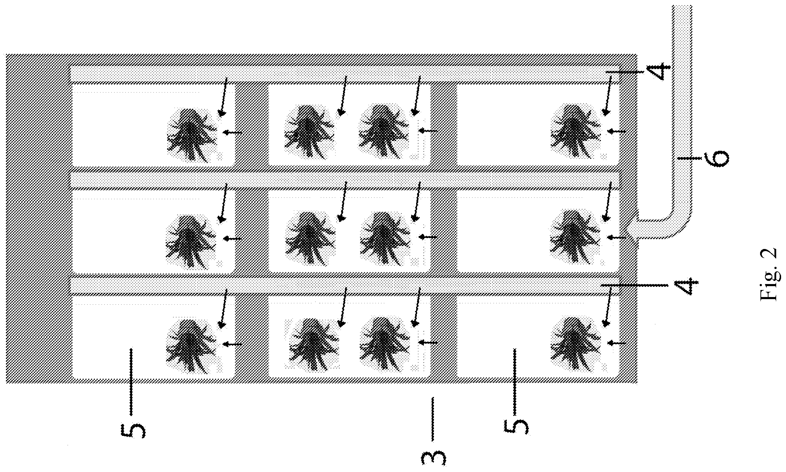

Figure 2: Schematic oblique top view of a growing tray (3):
   holders (5) hold each plant in a pot leaving passageways (4) for the feed in water for the plants.

The figures are predominantly schematic and not drawn to scale. Corresponding parts are designated in the figures with the same reference numerals.

The holders (5) will usually be made of biodegradable material with holes (not shown in the figures) making them water permeable so that the plants may suck up the water by capillary force.

Although the invention has been elucidated above with reference to an embodiment and application, it will be apparent that the invention is by no means limited thereto. On the contrary, many other variations are possible within the scope of the invention as defined by the appended claims for the person with ordinary skill in the art.

## Claims

1. A plant growing device (1) which does not contain a drainage system, said device comprising
- a container for feed in water for plants (2), a container for organic fertilizer (2a), a container for water (2b), a container for organic acid (2c) and optionally a mixer;
- one or more growing trays (3) for one or more plants in a substrate, comprising water permeable holders (5) for the plants and passageways (4) along the holders (5); **characterized by**
- a first tube (6) from said container for feed in water for the plants (2) to the one or more growing trays (3) for the transport of said feed to the plants;
- means (7) to condensate the water vapour leading to;
- a second tube (8) to lead back the condensed water to the container for water (2b).

2. A plant growing device (1) according to claim 1 wherein one or more of the plants are in a pot.

3. A plant growing device (1) according to claims 1 or 2 wherein the means (7) to condensate essentially consists of a tube at a temperature of about 20 - 22°C.

4. A method to grow plants by applying a plant growing device (1) according to anyone of the claims 1 - 3 by:
- filling a container for organic fertilizer (2a) with organic fertilizer, a container for water (2b) with water, a container for organic acid (2c) with organic acid, and filling a container for feed in water for the plants (2) with water, organic fertilizer and optionally organic acid from the respective containers, optionally with mixing;
- pumping the feed in water through a first tube (6) to one or more growing trays (3), optionally by an inlet water pipe so that the plants suck the water by capillary force;
- allowing the water transpired and evaporated to condensate on means (7) to condensate the water vapour; and
- using optionally artificial light.

5. The method to grow plants according to claim 4 wherein filling the container for feed in water for the plants (2) with organic fertilizer from the container for organic fertilizer (2a), water from the container for water (2b) and organic acid from the container for organic acid (2c) with the amounts is based on electrical conductivity data collected from the substrate.

6. The method to grow plants according to claim 4 or 5 wherein the organic fertilizer comprises worm manure.

7. The method to grow plants according to anyone of the claims 4 - 6 wherein the organic acid is citric acid or acetic acid.

## Patentansprüche

1. Eine Pflanzenanbauvorrichtung (1), die kein Drainagesystem enthält, wobei die Vorrichtung umfasst
- einen Behälter für Nährstoffe in Wasser für Pflanzen (2), einen Behälter für organischen Dünger (2a), einen Behälter für Wasser (2b), einen Behälter für organische Säure (2c) und gegebenenfalls einen Mischer;
- eine oder mehrere Anzuchtschalen (3) für eine oder mehrere Pflanzen in einem Substrat, umfassend
wasserdurchlässige Halter (5) für die Pflanzen und Durchgänge (4) entlang der Halter (5); **gekennzeichnet durch**
- ein erstes Rohr (6) von dem Behälter für die Nährstoffe in Wasser für Pflan-zen (2) zu der einen oder den mehreren Anzuchtschalen (3) für den Transport der Nährstoffe zu den Pflanzen;
- eine Einrichtung (7) zum Kondensieren des Wasserdampfes, die hinführt zu
- einem zweiten Rohr (8), um das kondensierte Wasser zu dem Behälter für Wasser (2b) zurückzuführen.

2. Eine Pflanzenanbauvorrichtung (1) gemäß Anspruch 1, wobei sich eine oder mehrere der Pflanzen in einem Topf befinden.

3. Eine Pflanzenanbauvorrichtung (1) gemäß Anspruch 1 oder 2, wobei die Einrichtung (7) zum Kondensieren im Wesentlichen aus einem Rohr mit einer Temperatur von etwa 20 bis 22°C besteht.

4. Verfahren zum Heranziehen von Pflanzen mit einer Pflanzenanbauvorrichtung (1) gemäß einem der Ansprüche 1 bis 3 durch:
- Füllen eines Behälters für organischen Dünger (2a) mit organischem Dünger, eines Behälters für Wasser (2b) mit Wasser, eines Behälters für organische Säure (2c) mit organischer Säure, und Füllen eines Behälters für Nährstoffe in Wasser für die Pflanzen (2) mit Wasser, organischem Dünger und gegebenenfalls organischer Säure aus den jeweiligen Behältern, gegebenenfalls unter Vermischung;
- Pumpen der Nährstoffe in Wasser durch ein erstes Rohr (6) zu einer oder mehreren Anzuchtschalen (3),
optional durch ein Zulaufwasserrohr, so dass die Pflanzen das Wasser durch Kapillarkraft ansaugen;
- Ermöglichen des Kondensierens des transpirierten und verdunsteten Wassers an der Einrichtung (7), um den Wasserdampf zu kondensieren; und
- optionale Anwendung von künstlichem Licht.

5. Das Verfahren zum Heranziehen von Pflanzen gemäß Anspruch 4, bei dem das Befüllen des Behälters für Nährstoffe in Wasser für die Pflanzen (2) mit organi-schem Dünger aus dem Behälter für organischen Dünger (2a), mit Wasser aus dem Behälter für Wasser (2b) und mit organischer Säure aus dem Behälter für organi-sche Säure (2c) hinsichtlich der Mengen auf elektrischen Leitfähigkeitsdaten basiert, die von dem Substrat gesammelt wurden.

6. Das Verfahren zum Heranziehen von Pflanzen gemäß Anspruch 4 oder 5, wobei der organische Dünger Wurmdung umfasst.

7. Das Verfahren zum Heranziehen von Pflanzen gemäß irgendeinem der Ansprüche 4 bis 6, wobei die organische Säure Zitronensäure oder Essigsäure ist.

## Revendications

1. Un dispositif (1) de culture de plantes qui ne contient pas de système de drainage, ledit dispositif comprenant
- un récipient pour l'alimentation en eau des plantes (2), un récipient pour de l'engrais organique (2a), un récipient pour de l'eau (2b), un récipient pour l'acide organique (2c) et optionnellement un mélangeur ;
- un ou plusieurs plateaux de culture (3) pour une ou plusieurs plantes dans un substrat, comprenant
des supports (5) perméables à l'eau pour les plantes et des passages (4) le long des supports (5) ; **caractérisé par**
- un premier tube (6) allant dudit récipient pour l'alimentation en eau des plantes (2) jusqu'auxdits un ou plusieurs plateaux de culture (3) pour le transport de ladite alimentation vers les plantes ;
- un moyen (7) pour condenser la vapeur d'eau menant à :
- un deuxième tube (8) pour renvoyer l'eau condensée vers le récipient pour l'eau (2b).

2. Un dispositif (1) de culture de plantes selon la revendication 1, dans lequel une ou plusieurs des plantes sont dans un pot.

3. Un dispositif (1) de culture de plantes selon les revendications 1 ou 2, dans lequel le moyen pour condenser (7) consiste essentiellement en un tube à une température d'environ 20 à 22°C.

4. Un procédé de culture de plantes en appliquant un dispositif (1) de culture de plantes selon l'une quelconque des revendications 1 à 3, par :
- le fait de remplir un réservoir pour engrais organique (2a) avec de l'engrais organique, un réservoir pour de l'eau (2b) avec de l'eau, un réservoir pour de l'acide organique (2c) avec de l'acide organique, et le fait de remplir un réservoir pour l'alimentation en eau des plantes (2) avec de l'eau, de l'engrais organique et optionnellement de l'acide organique provenant des récipients respectifs, optionnellement avec le fait de mélanger ;
- le fait de pomper l'eau d'alimentation à travers un premier tube (6), vers un ou plusieurs plateaux de culture (3),
optionnellement par un tuyau d'arrivée d'eau de telle sorte que les plantes aspirent l'eau par capillarité ;
- le fait de permettre à l'eau transpirée et évaporée de se condenser sur un moyen (7) pour condenser la vapeur d'eau ; et
- le fait d'utiliser optionnellement de la lumière artificielle.

5. Le procédé de culture de plantes selon la revendication 4, dans lequel le remplissage du récipient d'alimentation en eau pour les plantes (2) avec de l'engrais organique provenant du récipient pour engrais organique (2a), de l'eau provenant du récipient pour de l'eau (2b) et de l'acide organique provenant du récipient pour de l'acide organique (2c) avec les quantités est basé sur des données de conductivité électrique collectées depuis le substrat.

6. Le procédé de culture de plantes selon la revendication 4 ou la revendication 5, dans lequel l'engrais organique comprend du fumier de vers.

7. Le procédé de culture de plantes selon l'une quelconque des revendications 4 à 6, dans lequel l'acide organique est de l'acide citrique ou de l'acide acétique.
